(19) Europäisches Patentamt
European Patent Office
Office européen des brevets

(11) **EP 4 357 591 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **22202299.8**

(22) Anmeldetag: **18.10.2022**

(51) Internationale Patentklassifikation (IPC):
**F01K 23/06** (2006.01)

(52) Gemeinsame Patentklassifikation (CPC):
**F01K 23/065**

(54) **ERZEUGUNGSEINHEIT MIT SICHERER NETZKOPPLUNG EINER ASYNCHRONMASCHINE**

GENERATION UNIT WITH SECURE NETWORK COUPLING OF AN ASYNCHRONOUS MACHINE

UNITÉ DE GÉNÉRATION À COUPLAGE DE RÉSEAU SÉCURISÉ D'UNE MACHINE ASYNCHRONE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**24.04.2024 Patentblatt 2024/17**

(73) Patentinhaber: **Orcan Energy AG**
**81379 München (DE)**

(72) Erfinder:
• **ZIMMERMANN, Alexander**
**81476 München (DE)**
• **SCHUCHERT, Ralf**
**36419 Schleid (DE)**
• **KÖPF, Lukas**
**81545 München (DE)**
• **BISCHOFF, Alexander**
**85221 Dachau (DE)**
• **SPRINGER, Jens-Patrick**
**81379 München (DE)**

(74) Vertreter: **Grünecker Patent- und Rechtsanwälte PartG mbB**
**Leopoldstraße 4**
**80802 München (DE)**

(56) Entgegenhaltungen:
EP-A1- 3 940 913    DE-A1- 102018 209 054
DE-A1- 3 705 310

**Beschreibung**

**TECHNISCHES FELD**

Die vorliegende Erfindung bezieht sich auf Maßnahmen zur einfachen, sicheren und schonenden Netzkopplung einer Erzeugungseinheit mit Asynchronmaschine, die von einem Energiewandler, der gemäß einem thermodynamischen Kreisprozess arbeitet, angetrieben wird sowie auf eine Erzeugungsanlage aus einer oder mehreren dieser Erzeugungseinheiten.

**BEGRIFFE UND DEFINITIONEN**

Unter einer Erzeugungseinheit (EZE) wird eine Maschine verstanden, die nicht-elektrische in elektrische Energie wandelt.

Unter einer Erzeugungsanlage (EZA) wird eine Anlage verstanden, in der sich eine EZE oder mehrere EZEs sowie alle zum Betrieb erforderlichen elektrischen Einrichtungen befinden. Die zum Betrieb erforderlichen elektrischen Einrichtungen können beispielsweise Transformatoren oder speicherprogrammierbare Steuerungseinheiten zur Regelung der Wirk- und Blindleistungsabgabe der einzelnen EZE(s) oder der EZA sein.

Unter einer direkten Netzkopplung wird eine Verschaltung verstanden, in der eine Asynchronmaschine ohne zwischengeschalteten Umrichter mit einem Stromnetz verbunden ist.

Unter einer unmittelbaren Verbindung wird eine elektrische Verbindung verstanden, in der zwei elektrische Systeme oder elektrische Komponenten ohne zwischengeschaltete Leistungselektronik oder Schaltgeräte verbunden sind.

**HINTERGRUND DER ERFINDUNG**

Bekannte thermodynamische oder fluiddynamische Prozesse, insbesondere thermodynamische Kreisprozesse, dienen der Umwandlung von thermischer oder kinematischer Energie in elektrische Energie. In einem thermodynamischen Kreisprozess, wie beispielsweise einem Rankine Cycle, wird in einem geschlossenen Kreislauf abwechselnd ein Arbeitsfluid, in der Regel Wasser oder im Falle des Organic Rankine Cycle auch andere Arbeitsmittel wie Kältemittel, Kohlenwasserstoffe oder Silikonöle, durch Zufuhr von Wärme bei hohem Druck verdampft und nach der Expansion, bei welcher mechanische Leistung abgegeben wird, durch Abfuhr von Wärme bei niedrigem Druck kondensiert. Die gewonnene mechanische Leistung wird über eine elektrische Maschine umgewandelt und in ein Stromnetz eingespeist.

Zur Aufrechterhaltung der Netzstabilität werden als elektrische Maschinen vorzugsweise variabel erregte Synchronmaschinen oder Asynchronmaschinen mit Frequenzumrichter eingesetzt. Eine vom Organic Rankine Cycle angetriebene Asynchronmaschine mit Frequenzumrichter ist beispielsweise aus der EP 3940913 A1 bekannt. Diese Systeme sind jedoch relativ kostspielig und am Markt kaum konkurrenzfähig, insbesondere bei vergleichsweise geringen Einspeiseleistungen. Zudem sind sie relativ wartungsintensiv und im Falle der Asynchronmaschine mit Frequenzumrichter mit Verlusten durch die Leistungselektronik behaftet.

Weitere Systeme sind aus der DE102018209054 A1 und aus der DE3705310 A1 bekannt.

Eine bekannte Lösung, um diesen Nachteilen entgegenzuwirken, ist es, die Robustheit des Stromnetzes zu nutzen und die Asynchronmaschine direkt, also ohne Frequenzumrichter, an das Stromnetz zu koppeln. Dieser Ansatz stellt jedoch bei thermodynamischen oder fluiddynamischen Prozessen, insbesondere bei thermodynamischen Kreisprozessen der oben genannten Art ein nicht unerhebliches Problem dar, da die im Prozess und seiner Zuführung enthaltene Restenergie, die nach einer Notabschaltung noch kurzzeitig nachströmt, nur langsam abgebaut werden kann.

So fällt bei einer Notabschaltung der Erzeugungseinheit die auf den Rotor der Asynchronmaschine ausgeübte Bremswirkung durch das vom Netz im Stator erzeugte Feld weg und der Rotor kann, getrieben von der Restenergie im thermodynamischen Kreisprozess, gefährlich - hoch bis hin zu einer Beschädigung der Asynchronmaschine und der angekoppelten Expansionsmaschine - beschleunigen. Ebenso können bei der direkten Zuschaltung der Erzeugungseinheit an das Stromnetz hohe Einschaltströme auftreten, die die Spannung im Netz unzulässig absinken lassen. Weiterhin bezieht eine Asynchronmaschine auch als Generator induktive Blindleistung, die je nach Netzbeschaffenheit spannungsverändernd wirkt oder zumindest die Stromstärke ohne einen Nutzen erhöht.

Der Erfindung liegt die Aufgabe zugrunde, eine Erzeugungseinheit bereitzustellen, welche die genannten Nachteile überwindet.

**ZUSAMMENFASSUNG**

Gemäß einem ersten Aspekt der Erfindung ist eine Erzeugungseinheit, EZE, vorgesehen, die eine Asynchronmaschine mit einem Verbindungszweig zur direkten Netzkopplung an ein Stromnetz, einen Energiewandler, der gemäß einem thermodynamischen oder fluiddynamischen Prozess, insbesondere einem thermodynamischen Kreisprozess, arbeitet und damit die Asynchronmaschine zur Stromerzeugung antreibt, und eine Erregungskomponente umfasst, wobei die Erregungskomponente aus Kondensatoren gebildet ist, die mit der Asynchronmaschine verschaltet sind.

Die Kapazität der Kondensatoren kann mit der Induktivität der Asynchronmaschine einen Schwingkreis bilden, welcher es durch Resonanz ermöglicht, aus der sehr kleinen, durch die Rotor-Remanenz im Stator induzierten Spannung, eine genügend hohe Spannung zu erregen. Diese kann zur Magnetisierung der Asynchronmaschine beitragen und hohe Inrush-Ströme bei der synchronisierten Zuschaltung an das Stromnetz verhindern. Weiterhin verhindert sie ein Hochdrehen des Rotors bei einer unkontrollierten Abschaltung, wie beispielsweise einer Notabschaltung, der EZE bzw. der Asynchronmaschine, da sie an einem Bremswiderstand Leistung umsetzen kann, die bremsend wirkt.

Die Kondensatoren können mit der Asynchronmaschine unmittelbar, also ohne zwischengeschaltete Leistungselektronik oder Schaltgeräte, verbunden sein.

Alternativ können die Kondensatoren über ein Schaltgerät mit der Asynchronmaschine verbunden sein.

Das Stromnetz kann ein öffentliches Drehstromnetz an Land, vorzugsweise ein Nieder- oder Mittelspannungsnetz, oder ein Schiffsstromnetz sein.

Der thermodynamische Kreisprozess kann ein Rankine Cycle, vorzugsweise ein Organic Rankine Cycle sein.

Der Energiewandler kann eine Rankine Cycle Maschine, vorzugsweise eine Organic Rankine Cycle Maschine, mit einer Expansionsmaschine sein. Die Expansionsmaschine kann mechanisch mit einer Welle der Asynchronmaschine gekoppelt sein. Der Rankine Cycle Maschine kann Wärmeleistung, insbesondere Abwärme, zugeführt werden, um die Expansionsmaschine anzutreiben.

Die Asynchronmaschine kann in der Expansionsmaschine integriert sein. Die Asynchronmaschine kann eine Drehstromasynchronmaschine mit einem Kurzschlussläufer oder Käfigläufer sein.

Die Expansionsmaschine und die Asynchronmaschine können in einem verschließbaren, also halbhermetischen Gehäuse mit einem oder mehreren Dampfanschlüssen, insbesondere einem Dampfeinlass für Frischdampf und einem Dampfauslass für Abdampf, und dem elektrischen Anschluss untergebracht sein. Die Asynchronmaschine kann eine Nennleistung zwischen 50 bis 5000 kW, vorzugsweise zwischen 100 bis 2000 kW, insbesondere zwischen 150 bis 1000 kW aufweisen.

Die Kondensatoren können in Sternschaltung oder Dreieckschaltung verschaltet sein.

Die EZE kann ferner Bremswiderstände aufweisen, die über ein Bremswiderstandsschaltgerät mit der Asynchronmaschine verschaltet sein können. Die Bremswiderstände können in Sternschaltung oder Dreieckschaltung verschaltet sein.

Bei einer Abschaltung, beispielsweise einer Notabschaltung, der EZE vom Netz können die Bremswiderstände die vom thermodynamischen oder fluiddynamischen Prozess gelieferte Restenergie in Wärmeenergie umwandeln.

Das Bremswiderstandsschaltgerät kann Arbeitskontakte aufweisen, um die Bremswiderstände mit der Asynchronmaschine zu verbinden bzw. um die Bremswiderstände von der Asynchronmaschine zu trennen.

Die Arbeitskontakte können schließende Arbeitskontakte zur aktiven Einschaltung der Bremswiderstände sein.

Alternativ können die Arbeitskontakte öffnende Arbeitskontakte zur aktiven Ausschaltung der Bremswiderstände sein. Dies ermöglicht, dass bei einem Ausfall der Steuerung oder einem Ausfall der der Steuerspannungsversorgung, die Arbeitskontakte geschlossen sind, um den Rotor der Asynchronmaschine sicher zu bremsen.

Alternativ kann das Bremswiderstandsschaltgerät über schließende Arbeitskontakte und ein invertierendes Element in seiner Ansteuerung verfügen und damit aktiv ausgeschaltet werden, um bei einem Ausfall der Steuerung den Rotor der Asynchronmaschine sicher zu bremsen.

Ferner kann die EZE eine Steuerungseinheit zur Steuerung des Bremswiderstandsschaltgeräts aufweisen. Die Steuerungseinheit kann ausgebildet sein, bei einer Entkopplung der EZE vom Stromnetz, insbesondere bei einer Notabschaltung der EZE, die Bremswiderstände basierend auf einer gemessenen EZE-Spannung einmal oder mehrmals mit der Asynchronmaschine zu verbinden, vorzugsweise zu einem Zeitpunkt, an dem die gemessene EZE-Spannung einen Grenzwert übersteigt.

Ferner kann die EZE ein Netzschaltgerät wie beispielsweise ein Schütz, einen Leistungsschalter oder einen Lasttrennschalter zur An- bzw. Abkopplung der EZE an das Stromnetz und eine Steuerungseinheit zur Steuerung des Netzschaltgeräts aufweisen.

Die Steuerungseinheit kann ausgebildet sein, die Frequenz der Asynchronmaschine mit der Frequenz des Stromnetzes zu synchronisieren. Zur Synchronisierung kann die Steuerungseinheit die Drehzahl der Asynchronmaschine mit der Speisepumpe als Stellglied auf die Netzdrehzahl regeln.

Die Steuerungseinheit kann weiterhin ausgebildet sein, die Asynchronmaschine synchron an das Stromnetz zu schalten, vorzugsweise indem die Steuerungseinheit basierend auf einer gemessenen Netzspannung und einer gemessenen EZE-Spannung eine Differenzspannung bildet und basierend hierauf das Netzschaltgerät unter Berücksichtigung einer Anzugszeit des Netzschaltgeräts und weiterer signifikanter Verzögerungszeiten, beispielsweise von Koppelrelais, unterhalb eines Grenzwertes der Differenzspannung, vorzugsweise bei einem Spannungsbetrag zwischen 0 V bis 150 V, insbesondere kleiner 100 V, zuschaltet. Der Grenzwert kann der Nulldurchgang der Differenzspannung sein.

Insbesondere kann die Steuerungseinheit ausgebildet sein, zur Synchronisierung der Zuschaltung die Differenzspannung über ein Zeitintervall aufzuzeichnen, um einen Differenzspannungsverlauf, insbesondere einen sinusförmigen Differenzspannungsverlauf, zu bilden, und den Differenzspannungsverlauf, vorzugsweise mit einem Regressionsmodell über die Spannungsmaxima, insbesondere einem Hüllkurvendemodulator, in eine Hüllkurve umzuwandeln. Die Steuerungseinheit kann eine oder mehrere Eigenschaften der Hüllkurve wie einen aktuellen Gradienten der Hüllkurve ermitteln und basierend auf der einen oder den mehreren Eigenschaften und Informationen über das Netzschaltgerät, insbesondere der Anzugsdauer für das Schließen seiner Arbeitskontakte, und weiterer signifikanter Verzögerungszeiten, beispielsweise von Koppelrelais, einen Befehlszeitpunkt zur Übermittlung eines Einschaltbefehls an das Netzschaltgerät ermitteln, bei dem die Differenzspannung nach Ablauf der Anzugsdauer unterhalb des Grenzwertes liegt und kann den Einschaltbefehl an dem ermittelten Befehlszeitpunkt an das Netzschaltgerät senden.

Der Energiewandler kann eine Expansionsmaschine und einen Verdampfer umfassen, der ein Arbeitsfluid durch die zugeführte Wärmeleistung verdampfen kann und in die Expansionsmaschine zur Umwandlung in mechanische Leistung leiten kann. Ferner kann der Energiewandler eine Speisepumpe umfassen, deren Drehzahl steuerbar sein kann und die ausgebildet sein kann, das Arbeitsfluid von der Expansionsmaschine, vorzugsweise von einem dazwischengeschalteten Kondensator zur Verflüssigung, zu beziehen und es zurück in den Verdampfer zu befördern. Die Steuerungseinheit kann ausgebildet sein, die Drehzahl der Speisepumpe zu regeln oder zu steuern, womit das Druckverhältnis von Frischdampf bezogen auf den Druck im Kondensator angepasst wird, sodass die Drehzahl der Expansionsmaschine mit der Netzfrequenz bzw. Netzdrehzahl in Übereinstimmung gebracht wird.

Die EZE kann ferner einen zweiten Energiewandler, vorzugsweise eine Verbrennungskraftmaschine, umfassen. Der zweite Energiewandler kann die Abwärme erzeugen, die dem ersten Energiewandler, insbesondere der Rankine Cycle Maschine oder der Organic Rankine Cycle Maschine, zur Stromerzeugung zugeführt wird.

Der zweite Energiewandler kann mit Erdöl oder Erdölderivaten, vorzugsweise Methan oder Schweröl, oder auch mit Gasen wie beispielsweise Erdgas, Deponiegas, Klärgas, Grubengas, Biogas oder Wasserstoffgas, betrieben werden.

Der zweite Energiewandler kann ferner einen elektrischen Generator umfassen und diesen antreiben.

Gemäß einem zweiten Aspekt der Erfindung ist eine Erzeugungsanlage, EZA, vorgesehen, die mindestens eine EZE nach dem ersten Aspekt der Erfindung umfasst, und an ein Stromnetz zur Stromerzeugung angeschlossen ist. Das Stromnetz kann ein öffentliches Stromnetz an Land oder ein Schiffsstromnetz sein.

Die EZA kann ferner eine zweite EZE umfassen, welche parallel zur ersten EZE an das Stromnetz angeschlossen sein kann.

Ferner kann die EZA einen Transformator mit einer Unter- und Oberspannungsseite zur unmittelbaren Verbindung mit einem Netzanschlusspunkt des Stromnetzes umfassen. Die erste EZE und die zweite EZE können parallel mit der Unterspannungsseite des Transformators verschaltet sein. Durch den zwischengeschalteten Transformator können etwaige Spannungsdifferenzen zwischen dem Stromnetz und den EZEs ausgeglichen werden und/oder das EZA-Netz von dem übergeordneten Stromnetz isoliert, also schutzgetrennt, werden.

## ABKÜRZUNGSVERZEICHNIS

EZE     Erzeugungseinheit
EZA     Erzeugungsanlage
RC     Rankine Cycle (als thermodynamische Kreisprozess)
ORC     Organic Rankine Cycle

## FIGUREN

Bevorzugte Ausführungsbeispiele der Erfindung werden nachfolgend anhand der Zeichnungen näher erläutert. Es zeigen:

Figur 1 einen schematischen Aufbau einer EZE mit einer ORC-Maschine als Energiewandler gemäß einer ersten Ausführungsform der Erfindung;

Figur 2 einen exemplarischen Spannungsverlauf einer Differenzspannung zwischen dem Stromnetz und der Asynchronmaschine mit einem Indikator, der einen bevorzugten Zeitpunkt zur Zuschaltung der EZE angibt.

Figur 3 einen schematischen Regelkreis zur Synchronisierung der Frequenz der Asynchronmaschine mit der Netzfrequenz zur sicheren Zuschaltung der EZE.

Figur 4 einen schematischen Aufbau einer EZE mit einer ORC-Maschine zur Nutzung der Abwärme einer Verbrennungskraftmaschine, gemäß einer zweiten Ausführungsform der Erfindung; und

Figur 5 einen schematischen Aufbau einer EZA mit einer Einspeisung in ein Netz mit höherer Spannungsebene, eine Vielzahl von EZEs umfassend.

**BESCHREIBUNG**

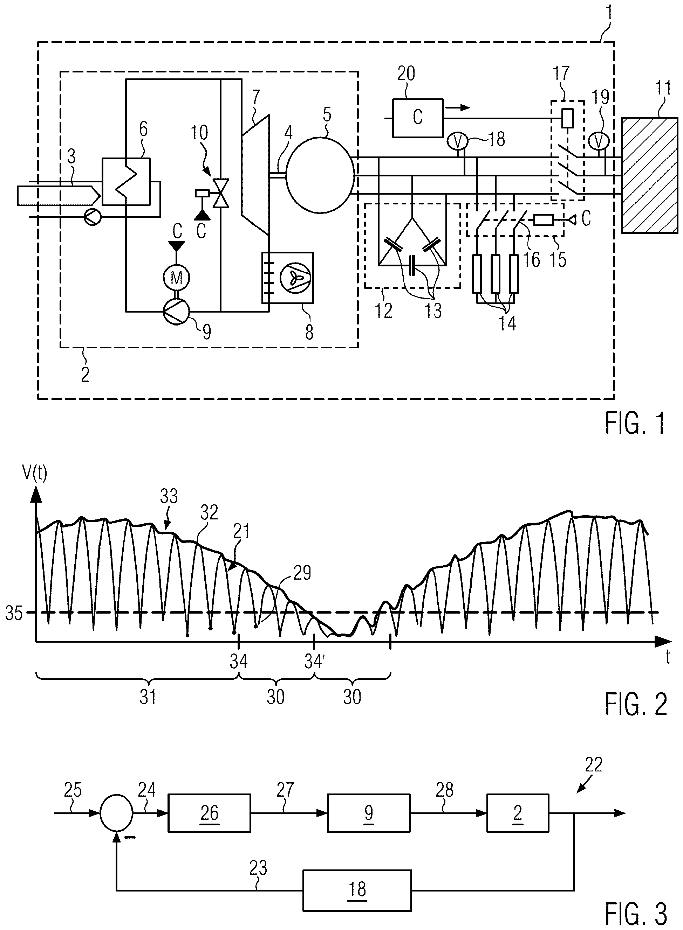

Figur 1 zeigt einen schematischen Aufbau einer EZE 1 gemäß einer ersten Ausführungsform der Erfindung, bei der der Energiewandler eine ORC-Maschine 2 ist.

**I. EZE mit einer ORC-Maschine**

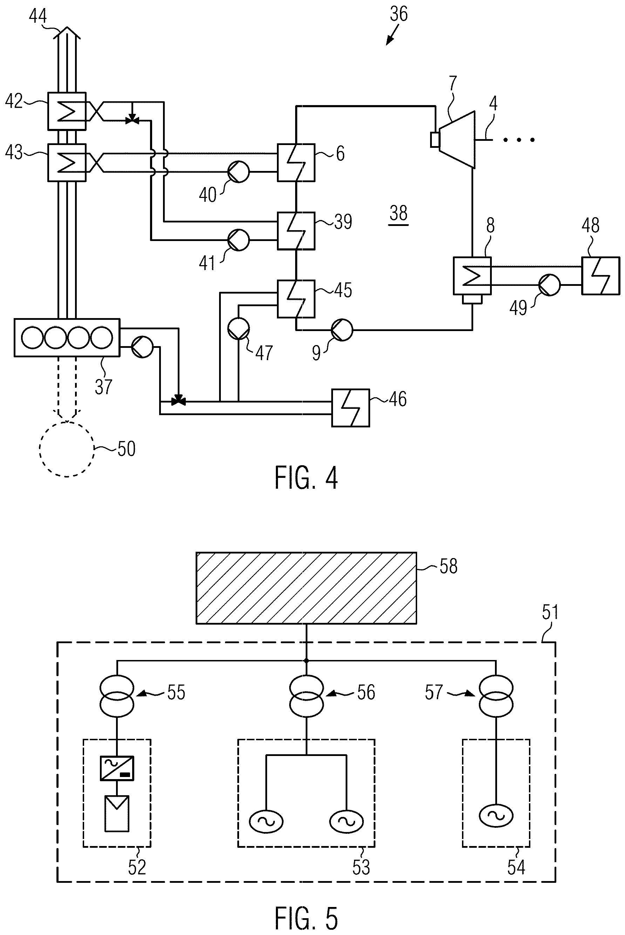

Der ORC-Maschine 2 wird Wärmeleistung 3 zugeführt, die sie in mechanische Leistung umwandelt und über eine Welle 4 an den Rotor einer Asynchronmaschine 5 überträgt. Die Wärmeleistung 3 kann von einer Wärmequelle, wie beispielsweise einer in Fig. 4 gezeigten Verbrennungskraftmaschine 37, über ein Wärmeträgermedium, wie beispielsweise Gas, Dampf, Thermalöl oder Wasser, der ORC-Maschine 2 zugeführt werden. Dort wird ein Arbeitsfluid unter Verwendung der Wärmeleistung 3 mit einem Wärmeübertrager 6 (Verdampfer) verdampft. Im Anschluss wird der entstandene Frischdampf in eine Expansionsmaschine 7 geleitet. Der Frischdampf wird in der Expansionsmaschine 7 unter Abgabe mechanischer Leistung expandiert, welche die an die Expansionsmaschine 7 gekoppelte Asynchronmaschine 5 antreibt. Im Anschluss wird der Dampf durch Wärmeentnahme mittels eines Kondensators 8 kondensiert. Eine Speisepumpe 9, die mit variabler Drehzahl betrieben (gesteuert oder geregelt) wird, fördert das flüssige Arbeitsfluid zurück in den Verdampfer 6, wo es erneut verdampft wird. Der Kreisprozess ist geschlossen. Die entnommene Wärme durch den Kondensator 8 kann als Nutzwärme für Nachfolgeprozesse verwendet werden. Weiterhin umfasst die ORC-Maschine 2 ein steuerbares Bypassventil 10, um das Druckgefälle über der Expansionsmaschine 7 zu steuern, insbesondere zu verringern. Das Bypassventil 10 wird über eine Steuerungseinheit 20 angesteuert. Alternativ oder zusätzlich kann das Bypassventil 10 händisch schaltbar sein.

Die Asynchronmaschine 5 ist direkt, also ohne zwischengeschalteten Frequenzumrichter, über einen Verbindungszweig mit einem Stromnetz 11 gekoppelt und speist die in elektrische Leistung umgewandelte Wärmeleistung 3 in das Stromnetz 11, vorzugsweise ein öffentliches Drehstromnetz oder ein Schiffsstromnetz, ein. Der Verbindungszweig kann aus Stromleitungen, Schaltern, Schützen, Relais, Steck- und/oder Lötverbindungen bestehen.

Parallel zur Asynchronmaschine 5 und zum Stromnetz 11 ist eine Erregungskomponente 12, bestehend aus einem Kondensatorblock mit mindestens einem Kondensator 13 für jede Phase, verschaltet. In der gezeigten Ausführungsform sind die Kondensatoren 13 in Dreieck verschaltet. In anderen Ausführungsformen können die Kondensatoren 13 in Stern verschaltet sein. Die Kondensatoren 13 selbst können wiederum aus Reihen-, Parallel- oder Gemischtschaltungen einzelner Kondensatoren bestehen. Gleichermaßen kann die Erregungskomponente 12 mit den Kondensatoren 13 auch seriell zwischen der Asynchronmaschine 5 und dem Stromnetz 11 verschaltet sein. Die Erregungskomponente 12 erzeugt eine Spannung an der noch nicht mit dem Netz verbundenen Asynchronmaschine 5 und sorgt damit für ihre Magnetisierung, wodurch die Einschaltströme reduziert werden. Durch eine spannungssynchronisierte Netzzuschaltung (siehe Kapitel II. EZE Netzankopplung) mit geringer Differenz zwischen Generatorspannung und Netzspannung können die Einschaltströme um betragsmäßig mindestens 80%, vorzugsweise 50% im Vergleich zur Zuschaltung einer entsprechenden Erzeugungseinheit ohne Erregungskomponente 12 reduziert werden. Weiterhin sorgt die Erregungskomponente 12 im netzgekoppelten Betrieb der EZE 1 für die Kompensation des induktiven Blindleistungsbezugs der Asynchronmaschine, wodurch der Scheinstrom der EZE 1 sinkt und das Stromnetz weniger belastet wird.

Ebenfalls parallel zur Asynchronmaschine 5 und zum Stromnetz 11 sind Bremswiderstände 14 über ein Bremswiderstandsschaltgerät 15 verschaltet. In der gezeigten Ausführungsform sind die Bremswiderstände 14 in Stern verschaltet. In anderen Ausführungsformen können die Bremswiderstände 14 in Dreieck verschaltet sein. Das Bremswiderstandsschaltgerät 15 weist Arbeitskontakte 16 auf, die in der gezeigten Ausführungsform als schließende Kontakte zur aktiven Einschaltung der Bremswiderstände 14 ausgebildet sind. Alternativ können die Arbeitskontakte 16 öffnende Kontakte zur aktiven Ausschaltung der Bremswiderstände sein. Dies ermöglicht, dass bei einem Ausfall der Steuerung oder einem Ausfall der Steuerspannungsversorgung die Arbeitskontakte 16 geschlossen sind, um den Rotor der Asynchronmaschine 5 sicher zu bremsen.

Ferner weist die EZE 1 ein Netzschaltgerät 17, vorzugsweise ein Schütz, einen Leistungsschalter oder einen Lasttrennschalter, zur An- bzw. Abkopplung der EZE 1 an das Stromnetz 11 auf. Das Netzschaltgerät 17 ist seriell zwischen der Asynchronmaschine 5 und dem Stromnetz 11 verschaltet.

Ferner umfasst die EZE 1 zwei Spannungsmessgeräte 18, 19 zur Messung der EZE-Spannung und der Netzspannung, vorzugsweise zur Berechnung der Differenzspannung zwischen EZE 1 und Stromnetz 11. Das Spannungsmessgerät 18 zur Messung der EZE-Spannung ist zwischen der Asynchronmaschine 5 und dem Netzschaltgerät 17 angeordnet. Das Spannungsmessgerät 19 zur Messung der Netzspannung ist zwischen dem Netzschaltgerät 17 und dem Stromnetz 11 angeordnet. Gleichermaßen kann mit nur einem Spannungsmessgerät die Differenzspannung über dem Netzschaltgerät 17 direkt gemessen werden.

Weiterhin weist die EZE 1 eine lokal oder entfernt angeordnete Steuerungseinheit 20 auf, die direkt oder über weitere Glieder wie Koppelrelais, Koppelschütze oder Optokoppler mit dem Bremswiderstandsschaltgerät 15 und dem Netzschaltgerät 17, insbesondere mit deren Steuerkontakten, verbunden ist, um die jeweiligen Arbeitskontakte zu schließen oder zu öffnen.

Die Steuerungseinheit 20 kann eine VPS (Verbindungs-Programmierbare Steuerung), eine SPS (Speicher-Programmierbare Steuerung), ein Microcontroller oder eine klassische elektronische Schaltung mit Analog- und Digitalgliedern sein. Die Funktion ist in einer VPS durch "Verdrahtung und Auswahl von Signal- und Schaltgeräten" dargestellt, bei einer SPS und einem Microcontroller durch eine Software und bei elektronischen Schaltungen durch die Auswahl von Bauelementen und deren Routing.

Zusätzlich können auch Schutzfunktionen auf der Steuerung laufen. Die Funktionen können auch auf der bereits im System zur Steuerung des ORC vorhandenen Steuerung abgebildet sein.

Ferner ist die Steuerungseinheit 20 mit der Speisepumpe 9 und dem Bypassventil 10 verbunden, um das Druckgefälle über der Expansionsmaschine 7 zu steuern.

## II. EZE Netzankopplung

Vor der Zuschaltung der EZE 1 an das Stromnetz 11 wird die Spannung der EZE 1 an das Stromnetz 11 angeglichen, also synchronisiert, um hohe Zuschaltströme zu verhindern.

Innerhalb eines thermodynamischen Prozesses wie dem ORC ist die Drehzahl der Expansionsmaschine 7 jedoch nicht in der gleichen Genauigkeit wie beispielsweise bei einer Verbrennungskraftmaschine regelbar und ist insbesondere bei kleineren Anlagen unter 5000 kW Nennleistung, bei denen vorzugsweise auf einen Dampfregler verzichtet wird, auch mit relativ großen Drehzahlschwankungen versehen. Weiterhin kann eine Spannungsamplitude der Asynchronmaschine 5 bei einer Erregung mit nicht schaltbaren Kondensatorgruppen nicht verstellt werden. Diese ist durch den Resonanzeffekt frequenzabhängig.

Figur 2 zeigt einen exemplarischen Spannungsverlauf einer Differenzspannung (als Absolutwert) zwischen dem Stromnetz 11 und der Asynchronmaschine 5 bei etwa 5 Hz Frequenzunterschied zwischen der EZE-Spannung und der Netzspannung.

Um trotz der oben genannten Herausforderungen die EZE 1 sanft an das Stromnetz zu schalten, ist die Steuerungseinheit 20 ausgebildet, die Drehzahl der Speisepumpe 9 und/oder die Öffnung des Bypassventils 10 anzusteuern, sodass die Drehzahl der Expansionsmaschine mit der Netzfrequenz bzw. Netzdrehzahl in Übereinstimmung gebracht, d.h. synchronisiert wird. Dreht sich beispielsweise die Speisepumpe 9 schneller, wird mehr Frischdampfdruck aufgebaut, womit sich ein größeres Druckverhältnis über der Expansionsmaschine 7 ergibt und sie sich damit schneller dreht. In einer Ausführungsform umfasst die EZE 1 ferner ein Dampfregelventil auf der Hochdruckseite der Expansionsmaschine 7.

Figur 3 zeigt einen schematischen Regelkreis 22 zur Synchronisierung der Drehzahl der Expansionsmaschine 7 und damit der Asynchronmaschine 5 mit der Drehzahl bzw. Frequenz des Stromnetzes 11. Eine derartige Regelung kann von der Steuerungseinheit 20 ausgeführt werden. Hierbei wird basierend auf der gemessenen EZE-Spannung mit dem Spanungsmessgerät 18 eine Frequenz 23 der Asynchronmaschine 5 ermittelt. Basierend auf der Regelabweichung 24, bezogen auf die Frequenz 25 des Stromnetzes 11, welche basierend auf der gemessenen Netzspannung mit dem Spanungsmessgerät 19 ermittelt oder fest vorgegeben wird, wird mit einem Regler 26 die Drehzahl 27 der Speisepumpe 9 eingestellt, womit das Druckverhältnis 28 mit Frischdampfdruck / Kondensationsdruck und damit die Drehzahl bzw. die Frequenz der Expansionsmaschine 7 bzw. der Asynchronmaschine 5 eingestellt wird.

Nachdem die Frequenz der EZE 1, wie in Figur 3 gezeigt, an die des Stromnetzes 11 angeglichen wurde, wird ein passender Zeitpunkt, der bestenfalls einem natürlichen Nulldurchgang 29 der Differenzspannung 21 entspricht, für die Zuschaltung ermittelt.

Hierfür ermittelt die Steuerungseinheit 20 basierend auf der gemessenen Netzspannung und der gemessenen EZE-Spannung die Differenzspannung 21. Basierend auf der Differenzspannung 21 schaltet die Steuerungseinheit 20 das Netzschaltgerät 17 ein, wenn die Differenzspannung 21 unterhalb eines Grenzwertes 35, vorzugsweise bei einem Spannungsbetrag zwischen 0 V bis 150 V, insbesondere bei kleiner 100 V, liegt.

In einer bevorzugten Ausgestaltung zur Steuerung der Zuschaltung (spannungssynchronisierte Netzzuschaltung) ist die Steuerungseinheit 20 ausgebildet, die EZE 1 vorausschauend, also unter Berücksichtigung der verfügbaren Anzugsdauer 30 bis zum Schließen der Arbeitskontakte des Netzschaltgerätes 17, zuzuschalten. Hierfür zeichnet die Steuerungseinheit 20 die Differenzspannung 21 über ein vordefiniertes Zeitintervall 31 auf, um einen Differenzspannungsverlauf, insbesondere einen sinusförmigen Differenzspannungsverlauf, zu bilden. Der Differenzspannungsverlauf wird anschließend mit einem Regressionsmodell über die Spannungsmaxima 32, insbesondere einem Hüllkurvendemodulator, in eine Hüllkurve 33 umgewandelt. Es werden eine oder mehrere Eigenschaften der Hüllkurve 33, wie ein aktueller Gradient, ermittelt, und basierend auf der einen oder den mehreren Eigenschaften und Information über das Netzschaltgerät 17 und weiterer relevanter Glieder im Steuerstromkreis, also der Anzugsdauer 30 bis zum Schließen der Arbeitskontakte, einen Befehlszeitpunkt 34 bis 34' zur Übermittlung eines Einschaltbefehls an das Netzschaltgerät 17

ermittelt, an dem die Differenzspannung 21 nach Ablauf der Anzugsdauer 30 unterhalb des Grenzwertes 35 liegt.

Damit ergibt sich ein wesentlich größeres Zeitfenster für die Zuschaltung.

Der Zuschaltalgorithmus prüft zyklisch Folgendes:

- ob die aktuelle Frequenz innerhalb einer erlaubten Toleranz um die Netzfrequenz liegt,
- ob die aktuelle Frequenz außerhalb eines Totbands um die Netzfrequenz liegt,
- ob die aktuelle Frequenz steigt, und
- ob ein Wert der Hüllkurve 33 nach Ablauf der Anzugsdauer 30 des Netzschaltgerätes 17 und weiterer relevanter Glieder im Steuerstromkreis unter einem maximal zugelassenen Grenzwert 35 liegt.

Sind alle Bedingungen erfüllt, wird der Ausgang der Steuerungseinheit 20 zum Einschalten des Netzschaltgerätes 17 aktiviert. Nach Ablauf der Anzugsdauer 30 sind seine Arbeitskontakte geschlossen und die Asynchronmaschine 5 mit dem Stromnetz 11 verbunden.

### III. EZE-Netzabkopplung

Weiterhin ist die Steuerungseinheit 20 ausgebildet, bei einer Entkopplung der EZE 1 vom Stromnetz 11, insbesondere bei einer Notabschaltung der EZE 1, die Bremswiderstände 14 basierend auf der gemessenen EZE-Spannung einmal oder mehrmals mit der Asynchronmaschine 5 zu verbinden. Hierfür vergleicht die Steuerungseinheit 20 die gemessene EZE-Spannung mit einem Grenzwert und schaltet die Bremswiderstände 14 zu einem Zeitpunkt zu, an dem die gemessene EZE-Spannung einen Grenzwert übersteigt, oder zu einem Zeitpunkt ab, wenn die gemessene EZE-Spannung einen Grenzwert unterschreitet. In anderen Ausführungsformen kann ein Zweipunktregler verwendet werden.

Beim Einspeisen elektrischer Energie in ein Stromnetz wird die drehende Asynchronmaschine 5 vom Stromnetz 11 abgebremst. Der Rotor der Asynchronmaschine 5 wird von der mechanischen Leistung aus dem vorgegliederten Prozess, z. B. der Enthalpie des Arbeitsfluid-Massenstroms des ORC-Prozesses, über die Expansionsmaschine 7 angetrieben. Die Expansionsmaschine 7 versucht, die Asynchronmaschine 5 zu beschleunigen. Jedoch erzeugt der Stator der Asynchronmaschine 5 ein fix von der Netzfrequenz abhängiges Drehfeld, dass den Rotor der Asynchronmaschine 5 unter Berücksichtigung des Schlupfes festhält. Unter Annahme eines verlustlosen Systems steht die mechanische Kraft der Expansionsmaschine 7 der elektromagnetischen Kraft des Stroms aus dem Stromnetz 11 gegenüber.

Wird die Asynchronmaschine 5 vom Stromnetz 11 getrennt, fällt die elektromagnetische Kraft weg. Es kann in zwei Lastfälle unterschieden werden:

a) Die ORC-Maschine 2 wird heruntergefahren, indem ihre Eingangsleistung reduziert wird. Bei einer minimalen Asynchronmaschinenleistung wird das Netzschaltgerät geöffnet. Die Restenergie aus dem vorgelagerten Prozess ist so gering, dass der Rotor nach Netztrennung nur wenig beschleunigt wird. Durch die Kapazität wird eine geringe Überspannung erregt; oder

b) die Asynchronmaschine 5 erfährt unter Volllast eine Notabschaltung oder einen Netzausfall. Der Rotor der Asynchronmaschine 5 wird stark beschleunigt. Die Asynchronmaschine 5 und die gekoppelte Expansionsmaschine 7 oder Turbine können mechanisch überlastet werden. Durch die Kapazität kann eine hohe Überspannung erregt werden.

Um dem effizient entgegenzuwirken, werden die Bremswiderstände 14 eingesetzt. Sie schließen mit der kondensatorerregten Asynchronmaschine 5 einen Stromkreis. Der fließende Strom im Stator der Asynchronmaschine 5 erzeugt ein Magnetfeld, das die Wicklungen bzw. den Käfig des Rotors der Asynchronmaschine 5 durchfließt und die Maschine bremst.

Dabei können bei der Asynchronmaschine 5 nur dann Momente auftreten, wenn ein Drehzahlunterschied, also ein Schlupf, zwischen Rotor und Stator besteht, denn nur dann wirken zeitliche Änderungen im Magnetfluss, was zu einer Induktion führt.

Die Bremswiderstände 14 sind so dimensioniert, dass sie die elektrische Energie bei einer Notabschaltung oder einem Netzausfall bei Volllast unbeschädigt in Wärmeenergie umwandeln können.

Um die Bremswiderstände 14 im netzgekoppelten Zustand der EZE 1 nicht dauerhaft zu bestromen, ist ihnen das Bremswiderstandsschaltgerät 15 vorgelagert. Es wird nur dann geschlossen, wenn das Netzschaltgerät 17 geöffnet ist. Da die dann netzentkoppelte kondensatorerregte Asynchronmaschine 5 eine Quelle darstellt, deren Spannung bei Belastung absinkt, besteht die Gefahr des teilweisen Verlustes der Erregung bei Zuschalten der Bremswiderstände 14, womit ein teilweiser Verlust der Bremsleistung einhergeht, gemäß

$$deltaP\_Brems = 3 * (deltaU\_Erregung)^2 / R\_Brems$$

im Drehstromkreis unter Annahme der Strang-Größen.

Weiterhin wird ein Teil der Restenergie aus dem ORC abgebaut, wodurch Drehzahl und Frequenz sinken. Durch das dadurch verschlechterte Schwingkreisverhalten nimmt auch die erregte Spannung ab. Eine weitere Bedingung für das Einschalten der Bremswiderstände ist somit das Vorhandensein einer Mindest-Erregungsspannung. Damit können die Bremswiderstände 14 bei einem Bremsvorgang mehrmals ein- und ausgeschaltet werden. Der schematische Ablauf während des Bremsvorgangs ist wie folgt:

a) EZE 1 wird vom Stromnetz 11 getrennt, Spannung ist hoch und steigend,
b) Bremswiderstände 14 werden eingeschaltet,
c) Spannung sinkt durch Widerstandslast und fallende Frequenz,
d) Bremswiderstände werden ausgeschaltet,
e) Spannung steigt durch fehlende Last und Frequenzerhöhung (es ist immer noch Restenergie aus dem ORC verfügbar),
f) Bremswiderstände werden wieder eingeschaltet und
g) zurück zu Schritt c).

Zum Erhalt maximaler Sicherheit wird das Bremswiderstandsschaltgerät 15 aktiv ausgeschaltet, damit es bei Ausfall der Steuerung geschlossen ist.

**IV. EZE mit einer Verbrennungskraftmaschine und einer ORC-Maschine zur Nutzung der Abwärme der Verbrennungskraftmaschine**

Figur 4 zeigt einen schematischen Aufbau einer EZE 36 gemäß einer zweiten Ausführungsform der Erfindung. Die EZE 36 umfasst neben den Komponenten der ersten Ausführungsform gemäß Figur 1 weiterhin eine Verbrennungskraftmaschine 37, dessen Abwärme durch eine ORC-Maschine 38 genutzt wird.

Die ORC-Maschine 38 umfasst neben dem ersten Wärmeübertrager 6 (Verdampfer) einen zweiten Wärmeübertrager 39 (Vorwärmer). Beide Wärmeübertrager 6, 39 sind jeweils über einen Wärmeträgermedium-Kreislauf mit einer Pumpe 40, 41 an einen Abgas-Wärmeübertrager 43, 42 zum Übertragen von Wärme aus einem Abgasstrom 44 der Verbrennungskraftmaschine 37 angebunden. Ferner umfasst die ORC-Maschine 38 einen dritten Wärmeübertrager 45 zum Übertragen von Wärme aus einer Kühlflüssigkeit des Verbrennungsmotors 37. Ebenfalls ist in Figur 4 der mit der Verbrennungskraftmaschine 37 gekoppelte Kühlkreislauf mit einem Motorkühler 46 dargestellt, aus welchem die Wärme der Kühlflüssigkeit über den dritten Wärmeübertrager 45 und eine Pumpe 47 abgezweigt wird. Die ORC-Maschine 38 umfasst ferner einen Kondensator 8, der Teil eines Kühlkreislaufs mit einem Kühler 48 (z.B. ein Luftkühler) und einer Kühlmittelpumpe 49 ist. Alternativ kann der Kondensator 8 die Wärme auch direkt, wie in der EZE 1 gemäß Figur 1 dargestellt, an die Luft abgeben.

In einer Ausführungsform wird die EZE 36 um einen elektrischen Generator 50 ergänzt, der von der Verbrennungskraftmaschine 37 zur Stromerzeugung angetrieben wird. Seine elektrische Energie kann über einen Frequenzumrichter oder über eine direkte Kopplung in das Stromnetz eingespeist werden (nicht gezeigt).

**V. EZA**

Figur 5 zeigt einen schematischen Aufbau einer Erzeugungsanlage, EZA 51, die eine Vielzahl von EZEs 52...54 umfasst, wobei eine oder mehrere der EZEs 53, 54 der EZE 1 in Figur 1 oder der EZE 36 in Figur 4 entsprechen. Wie in Figur 5 gezeigt, kann die bereitgestellte elektrische Energie der EZEs 52...54 über Transformatoren 55...57 an einem Netzanschlusspunkt in das öffentliche Stromnetz 58, insbesondere ein Mittelspannungsnetz mit 20 kV oder einer anderen Spannungsebene dieses Bereiches, oder in ein Schiffsstromnetz eingespeist werden.

Die EZEs 52...54 können jeweils mit der Unterspannungsseite eines jeweiligen Transformators 55...57 verschaltet sein.

**VI. Schutzmechanismen**

Um alle oben genannten Funktionen der EZE 1 jederzeit verlässlich durchführen zu können, werden folgende Checks durchgeführt:

- Prüfung der Netzspannung und Generatorspannung auf Drehrichtung,

- Prüfung der Netzspannung und Generatorspannung auf Symmetrie,
- Überwachung auf Überfrequenz zur Erkennung von fehlerhaften Reglereinstellungen (P, I, D),
- Prüfung der Erregung.
- vor jedem Startvorgang: Prüfung des Wertes des Bremswiderstands 14,
- bei jedem Zuschaltvorgang: Bewertung der ggf. alterungsbedingten Anzugszeit 30 des Netzschaltgerätes 17 und weiterer relevanter Glieder im Steuerstromkreis und Speicherung für den nächsten Schaltvorgang,
- liegt der letzte Zuschaltvorgang und damit der letzte Messwert der Anzugszeit 30 zu weit in der Vergangenheit: Durchführung einer "Trockenschaltung" ohne Spannung vor dem Hochfahren der Maschine zur genauen Wertermittlung und
- Prüfung der wichtigen Schaltgeräte (Netzschaltgerät 17, Bremswiderstandsschaltgerät 15, Hauptschalter, Bremswiderstandsmessungsschütz), vorzugsweise Überprüfung auf Rückmeldung innerhalb einer bestimmten Zeit.

### VII. Auslegung der Kondensatoren

Eine herkömmliche Asynchronmaschine kann als selbsterregter Asynchrongenerator betrieben werden. Die Vorgehensweise ist beispielsweise in dem Lehrbuch "Elektrische Maschinen", Auflage: 17, Rolf Fischer, 2017 beschrieben.

Für die Auslegung der Kondensatoren 13 ist eine antreibbare Maschinenwelle von Vorteil, so dass die Maschine mit ihrer Polzahl p entsprechend bei Synchrondrehzahl n_sync betrieben werden kann, gemäß

$$n\_sync = 2*f*60s/(2*p*1min).$$

Der am Stromnetz 11 fließende Strom ist ein reiner Magnetisierungsstrom, er wird gemessen und daraus wird die notwendige Kondensatorkapazität berechnet. Die Messung dieses Stroms könnte theoretisch im Motorbetrieb eines hermetisch geschlossenen Klimakompressors durchgeführt werden, dies scheitert jedoch an dem Umstand, dass ein Klimakompressor nur mit Fluid und dem darin enthaltenen Schmierstoff betrieben werden kann. Dies ist aber bereits mit intern mechanisch fest gekoppeltem Verdichter und Fluid eine mechanische Last und stellt somit keinen Leerlaufbetrieb mehr dar. Ein Betrieb des hermetisch geschlossenen Klimakompressors ohne Fluid und ohne Schmierstoff kann die Maschine zerstören. Selbst ein Betrieb mit falscher Drehrichtung, die von außen nicht ersichtlich ist, kann die Maschine unbeabsichtigt zerstören.

Aus diesen Gründen unterliegen die folgenden Ausführungen der Auslegung der Kondensatoren 13 zur Erregung den Besonderheiten einer elektrischen Maschine, welche zusammen mit der thermodynamischen Expansionsmaschine 7 im selben Gehäuse untergebracht ist.

Die Größen des Ersatzschaltbildes können in der Regel vom Hersteller der elektrischen Maschine bezogen werden. Für den Leerlauf, d. h. Schlupf s = 0, entfällt die magnetische Kopplung sowie der Läuferkreis. Somit lässt sich der Leerlaufstrom, der nur noch dem reinen Magnetisierungsstrom I_u entspricht, einfach nach

$$I\_u = U/(R\_s + 2*Pi*f*L\_s)$$

berechnen und ist die Spannung, geteilt durch die Impedanz aus Ständer-Wirkwiderstand Rs und dem (frequenzabhängigen) Ständer-Blindwiderstand 2*Pi*f*L_s.

Am Markt verfügbare Drehstrom-Leistungs-Kondensatoren sind intern in der Regel im Dreieck geschaltet. Die notwendige Kondensatorgröße kann nach

$$C = I\_u/(sqrt(3)*2*Pi*f*U)$$

berechnet werden.

Die gezeigte Berechnung stellt die Grobauslegung der Erregungskapazität dar. Aus ihr erfolgt nun die Festlegung eines Auslegungsstartwertes für die Feinauslegung - dies ergibt sich schon aus der Tatsache, dass die Nenngrößen der am Markt erhältlichen Kondensatoren nur in einer bestimmten Granularität vorliegen - um dann durch heuristische Herangehensweise die sicher funktionierende und beschaffbare Kapazität zu bestimmen:

a) Beschleunigung und Halten des Generators auf einer bestimmten Drehzahl durch Variation der Speisepumpendrehzahl oder durch Nutzen des Generator-Drehzahlreglers,
b) Messung der erregten Ist-Spannung und Vergleich mit der erwarteten SollSpannung,
c1) Falls Abweichung zu groß: Abschaltung, Korrektur der Kapazität, dann a)

c2) Falls Abweichung innerhalb der festgelegten Toleranz: fertig oder a) mit weiterer Drehzahl.

Das Ergebnis ist eine Kapazität, die unter den reellen Gegebenheiten - Leitungslängen, Leitungsführung, Messungenauigkeiten bei der Grobauslegung usw. - sicher eine Spannung erregt, die zur erfolgreichen Synchronisierung an Netze mit den erwarteten Parametern Frequenz und Spannung führt.

## VIII. Vorteile der Erfindung

- einfach,
- sicher,
- günstig,
- leicht beschaffbare Teile,
- hoher Wirkungsgrad,
- netzverträglich,
- wenig Platzbedarf und
- wenig Wärmeentwicklung

## Patentansprüche

1. Erzeugungseinheit, EZE (1, 36), umfassend:

   eine Asynchronmaschine (5), mit einem Verbindungszweig zur direkten Netzkopplung an ein Stromnetz (11);
   einen Energiewandler (2), der gemäß einem thermodynamischen oder fluiddynamischen Prozess, insbesondere einem thermodynamischen Kreisprozess, arbeitet und damit die Asynchronmaschine (5) zur Stromerzeugung antreibt, und
   **gekennzeichnet durch** eine Erregungskomponente (12),
   wobei die Erregungskomponente (12) aus Kondensatoren (13) gebildet ist, die mit der Asynchronmaschine (5) verschaltet sind.

2. Die EZE (1, 36) nach Anspruch 1, wobei der Energiewandler (2) eine Rankine Cycle Maschine, vorzugsweise eine Organic Rankine Cycle Maschine, mit einer Expansionsmaschine (7) ist, wobei die Expansionsmaschine (7) mechanisch mit einer Welle der Asynchronmaschine (5) gekoppelt ist, und wobei der Rankine Cycle Maschine Wärmeleistung (3), insbesondere Abwärme, zugeführt wird, um die Expansionsmaschine (7) anzutreiben.

3. Die EZE (1, 36) nach Anspruch 2, wobei die Asynchronmaschine (5) in der Expansionsmaschine (7) integriert ist, und vorzugsweise eine Drehstromasynchronmaschine mit einem Kurzschlussläufer oder Käfigläufer ist.

4. Die EZE (1, 36) gemäß Anspruch 3, wobei die Expansionsmaschine (7) und die Asynchronmaschine (5) in einem verschließbaren, also halbhermetischen Gehäuse mit einem oder mehreren Dampfanschlüssen, insbesondere einem Dampfeinlass für Frischdampf und einem Dampfauslass für Abdampf, und elektrischem Anschluss untergebracht sind.

5. Die EZE (1, 36) nach einem der vorhergehenden Ansprüche, wobei die Asynchronmaschine (5) eine Nennleistung zwischen 50 bis 5000 kW, vorzugsweise zwischen 100 bis 2000 kW, insbesondere zwischen 150 bis 1000 kW, aufweist.

6. Die EZE (1, 36) nach einem der vorhergehenden Ansprüche, wobei die Kondensatoren (13) in Sternschaltung oder Dreieckschaltung verschaltet sind.

7. Die EZE (1, 36) nach einem der vorhergehenden Ansprüche, wobei die EZE (1, 36) Bremswiderstände (14) aufweist, die über ein Bremswiderstandsschaltgerät (15) mit der Asynchronmaschine (5), vorzugsweise in Sternschaltung oder Dreieckschaltung, verschaltet sind.

8. Die EZE (1, 36) nach Anspruch 7, wobei das Bremswiderstandsschaltgerät (15) Arbeitskontakte (16) aufweist, um die Bremswiderstände (14) mit der Asynchronmaschine (5) zu verbinden bzw. um die Bremswiderstände (14) von der Asynchronmaschine (5) zu trennen, wobei die Arbeitskontakte (16) vorzugsweise schließende Arbeitskontakte zur aktiven Einschaltung der Bremswiderstände (14) oder öffnende Arbeitskontakte zur aktiven Ausschaltung der Bremswiderstände (14) sind, um bei Ausfall der Steuerung, wie beispielswese einem Ausfall der Steuerspannungsversorgung, den Rotor der Asynchronmaschine (5) sicher zu bremsen.

9. Die EZE (1, 36) nach einem der Ansprüche 7 oder 8, wobei die EZE (1, 36) eine Steuerungseinheit (20) zur Steuerung des Bremswiderstandsschaltgeräts (15) aufweist, die ausgebildet ist, bei einer Entkopplung der EZE (1, 36) vom Stromnetz (11), insbesondere bei einer Notabschaltung der EZE (1, 36), die Bremswiderstände (14) basierend auf einer gemessenen EZE-Spannung einmal oder mehrmals mit der Asynchronmaschine (5) zu verbinden, vorzugsweise zu einem Zeitpunkt, an dem die gemessene EZE-Spannung einen Grenzwert übersteigt.

10. Die EZE (1, 36) nach einem der vorhergehenden Ansprüche, wobei die EZE (1, 36) ein Netzschaltgerät (17), vorzugsweise ein Schütz, einen Leistungsschalter oder einen Lasttrennschalter, zur An- bzw. Abkopplung der EZE (1, 36) an das Stromnetz (11), und eine Steuerungseinheit (20) zur Steuerung des Netzschaltgeräts (17) aufweist, wobei die Steuerungseinheit (20) ausgebildet ist, die Asynchronmaschine (5) synchron an das Stromnetz (11) zu schalten, vorzugsweise indem die Steuerungseinheit (20) basierend auf einer gemessenen Netzspannung und einer gemessenen EZE-Spannung eine Differenzspannung (21) bildet und basierend hierauf das Netzschaltgerät (17) unterhalb eines Grenzwertes (35) der Differenzspannung (21), vorzugsweise bei einem Spannungsbetrag zwischen 0 V bis 150 V, insbesondere kleiner 100 V, zuschaltet.

11. Die EZE (1, 36) nach Anspruch 10, wobei die Steuerungseinheit (20) ausgebildet ist, zur Synchronisierung der Zuschaltung die Differenzspannung (21) über ein Zeitintervall (31) aufzuzeichnen, um einen Differenzspannungsverlauf, insbesondere einen sinusförmigen Differenzspannungsverlauf, zu bilden, und den Differenzspannungsverlauf, vorzugsweise mit einem Regressionsmodell über die Spannungsmaxima (32), insbesondere einem Hüllkurvendemodulator, in eine Hüllkurve (33) umzuwandeln, eine oder mehrere Eigenschaften der Hüllkurve (33) wie einen aktuellen Gradienten der Hüllkurve (33) ermittelt, und basierend auf der einen oder den mehreren Eigenschaften und Informationen über das Netzschaltgerät (17), insbesondere deren Anzugsdauer (30) für das Schließen derer Arbeitskontakte, einen Befehlszeitpunkt (34) zur Übermittlung eines Einschaltbefehls an das Netzschaltgerät (17) ermittelt, an dem die Differenzspannung (21) nach Ablauf der Anzugsdauer (30) unterhalb des Grenzwertes (35) liegt, und den Einschaltbefehl an dem ermittelten Befehlszeitpunkt (34) an das Netzschaltgerät (17) sendet.

12. Die EZE (1, 36) nach Anspruch 10 oder 11, wobei der Energiewandler (2) eine Expansionsmaschine (7) und einen Verdampfer (6) umfasst, der ein Arbeitsfluid durch die zugeführte Wärmeleistung (3) verdampft und in die Expansionsmaschine (7) zur Umwandlung in mechanische Leistung leitet, und eine Speisepumpe (9), deren Drehzahl steuerbar ist und die ausgebildet ist, das Arbeitsfluid von der Expansionsmaschine (7), vorzugsweise von einem dazwischengeschalteten Kondensator (8) zur Verflüssigung, zu beziehen und es zurück in den Verdampfer (6) zu befördern, wobei die Steuerungseinheit (20) ausgebildet ist, die Drehzahl der Speisepumpe (9) zu regeln oder zu steuern, womit das Druckverhältnis von Frischdampf bezogen auf den Druck im Kondensator (8) angepasst wird, sodass die Drehzahl der Expansionsmaschine (7) mit der Netzfrequenz bzw. Netzdrehzahl des Stromnetz (11) in Übereinstimmung gebracht wird.

13. Die EZE (1, 36) nach einem der vorhergehenden Ansprüche, wobei die EZE (1, 36) einen zweiten Energiewandler, vorzugsweise eine Verbrennungskraftmaschine (37), umfasst, wobei der zweite Energiewandler Abwärme erzeugt, die dem ersten Energiewandler (2) zur Stromerzeugung zugeführt wird.

14. Die EZE (1, 36) nach Anspruch 13, wobei die EZE (1, 36) einen elektrischen Generator (50) umfasst, wobei der zweite Energiewandler ausgebildet ist, den elektrischen Generator (50) anzutreiben.

15. Eine Erzeugungsanlage, EZA (51), mit mindestens einer EZE (1, 36) gemäß der vorhergehenden Ansprüche, wobei die EZA (51) an ein Stromnetz (58), insbesondere einem öffentliches Stromnetz an Land oder ein Schiffsstromnetz, zur Stromerzeugung angeschlossen ist.

**Claims**

1. Generating unit, GU (1, 36), comprising:

   an asynchronous machine (5) with a connecting branch for direct grid connection to a power grid (11);

an energy converter (2) that operates according to a thermodynamic or fluiddynamic process, in particular a thermodynamic cycle process, and thus drives said asynchronous machine (5) for generating electricity, and **characterized by**

an excitation component (12),

where said excitation component (12) is formed from capacitors (13) that are connected to said asynchronous machine (5).

2. GU (1, 36) according to claim 1, where said energy converter (2) is a Rankine Cycle machine, preferably an Organic Rankine Cycle machine, with an expansion engine (7), where said expansion engine (7) is coupled mechanically to a shaft of said asynchronous machine (5), and where said Rankine Cycle machine is supplied with heat output (3), in particular waste heat, to drive said expansion engine (7).

3. GU (1, 36) according to claim 2, where said asynchronous machine (5) is integrated into said expansion engine (7) and is preferably a three-phase asynchronous machine with a short circuit rotor or squirrel-cage rotor.

4. GU (1, 36) according to claim 3, where said expansion machine (7) and said asynchronous machine (5) are housed in a closable, i.e. semi-hermetic housing with one or more steam connections, in particular a steam inlet for live steam and a steam outlet for waste steam, and an electrical connection.

5. GU (1, 36) according to one of the preceding claims, where said asynchronous machine (5) has a rated power of between 50 and 5000 kW, preferably between 100 and 2000 kW, in particular between 150 and 1000 kW.

6. GU (1, 36) according to one of the preceding claims, where said capacitors (13) are starconnected or delta-connected.

7. GU (1, 36) according to one of the preceding claims, where said GU (1, 36) comprises brake resistances (14) which are connected to said asynchronous machine (5) via a brake resistance switching device (15), preferably as a star connection or a delta connection.

8. GU (1, 36) according to claim 7, where said brake resistance switching device (15) comprises operating contacts (16) for connecting said brake resistances (14) to said asynchronous machine (5) or to disconnect said brake resistances (14) from said asynchronous machine (5), respectively, where said operating contacts (16) are closing operating contacts for actively switching on said brake resistances (14) or opening operating contacts for actively switching off said brake resistances (14) in order to securely brake said rotor of said asynchronous machine (5) in the event of a failure of the control device such as a failure of the control voltage supply.

9. GU (1, 36) according to one of the claims 7 or 8, where said GU (1, 36) comprises a control unit (20) for controlling said brake resistor switching device (15), which is configured to connect said brake resistances (14) once or several times to said asynchronous machine (5) based on a measured GU voltage when said GU (1, 36) is disconnected from said power grid (11), in particular in the event of an emergency shutdown of said GU (1, 36), preferably at a point in time at which the measured GU voltage exceeds a limit value.

10. GU (1, 36) according to one of the preceding claims, where said GU (1, 36) comprises a grid switching device (17), preferably a contactor, a circuit breaker, or a load-break switch, for connecting or disconnecting said GU (1, 36) to/ from said power grid (11), and a control unit (20) for controlling said grid switching device (17),

where said control unit (20 is configured to connect said asynchronous machine (5) synchronously to said power grid (11), preferably in that said control unit (20) forms a differential voltage (21) based on a measured grid voltage and a measured GU voltage and, based on this, connects said grid switching device (17) below a limit value (35) of said differential voltage (21), preferably at a voltage magnitude between 0 V and 150 V, in particular less than 100 V.

11. GU (1, 36) according to claim 10, where said control unit (20) is configured to record said differential voltage (21) over a time interval (31) for synchronizing the connection in order to form a differential voltage profile, in particular a sinusoidal differential voltage profile, and to convert the differential voltage profile to an envelope (33), preferably using a regression model via the voltage maxima (32), in particular an envelope detector, to determine one or more properties of said envelope (33), such as a present gradient of said envelope (33) and to determine a command point in time (34), based on the one or more properties and information about said grid switching device (17), in particular its pull-in time (30) for closing its operating contacts, for transmitting a switch-on command to said grid switching device (17), at which said differential voltage (21) is below said limit value (35) after said pull-in time (30) has elapsed, and to sends said switch-on command to said grid switching device (17) at said determined command point in time (34).

12. GU (1, 36) according to claim 10 or 11, where said energy converter (2) comprises an expansion machine (7) and a vaporizer (6) capable of vaporizing a work fluid with the heat output (3) supplied and directs it into said expansion machine (7) for conversion to mechanical power, and a feed pump (9), the rotational speed of which can be controlled and which is configured to obtain the work fluid from said expansion machine (7), preferably from a condenser (8) for liquefaction connected therebetween, and to convey it back to said vaporizer (6), where said control unit (20) is configured to regulate or control the rotational speed of said feed pump (9), with which the pressure ratio of live steam is adjusted in relation to the pressure in said condenser (8), so that the rotational speed of said expansion machine (7) is made to match the grid frequency or the grid rotational speed of said power grid (11).

13. GU (1, 36) according to one of the preceding claims, where said GU (1, 36) comprises a second energy converter, preferably an internal combustion engine (37), where said second energy converter generates waste heat which said first energy converter (2) is supplied with for generating electricity.

14. GU (1, 36) according to claim 13, where said GU (1, 36) comprises an electrical generator (50), where said second energy converter is configured to drive said electrical generator (50).

15. Generating system, GS (51) with at least one GU (1, 36) according to the preceding claims, where said GS (51) is connected to a power grid (58), in particular a public power grid on land or a ship electrical system, for generating electricity.


**Revendications**

1. Unité de production, EZE, (1, 36), comprenant :

   une machine asynchrone (5), avec une branche de connexion permettant un couplage direct à un réseau électrique (11) ;
   un convertisseur d'énergie (2) qui fonctionne selon un procédé thermodynamique ou fluidodynamique, en particulier selon un procédé de cycle thermodynamique, et qui entraîne ainsi la machine asynchrone (5) afin de produire de l'électricité, et
   **caractérisée par** un composant d'excitation (12),
   dans laquelle le composant d'excitation (12) est formé de condensateurs (13) qui sont connectés à la machine asynchrone (5).

2. EZE (1, 36) selon la revendication 1, dans laquelle le convertisseur d'énergie (2) est une machine à cycle de Rankine, de manière préférée une machine à cycle organique de Rankine, avec une machine d'expansion (7), dans laquelle la machine d'expansion (7) est couplée mécaniquement à un arbre de la machine asynchrone (5), et dans laquelle de la puissance thermique (3), en particulier de la chaleur résiduelle, est fournie à la machine à cycle de Rankine afin d'entraîner la machine d'expansion (7).

3. EZE (1, 36) selon la revendication 2, dans laquelle la machine asynchrone (5) est intégrée dans la machine d'expansion (7) et est de manière préférée une machine asynchrone à courant triphasé avec un rotor à court-circuit ou un rotor à cage.

4. EZE (1, 36) selon la revendication 3, dans laquelle la machine d'expansion (7) et la machine asynchrone (5) sont logées dans un boîtier verrouillable, c'est-à-dire semihermétique, avec un ou plusieurs raccord(s) vapeur, en particulier une entrée de vapeur pour de la vapeur fraîche et une sortie de vapeur pour de la vapeur d'échappement, et un raccord électrique.

5. EZE (1, 36) selon l'une quelconque des revendications précédentes, dans laquelle la machine asynchrone (5) présente une puissance nominale comprise entre 50 et 5 000 kW, de manière préférée entre 100 et 2000 kW, en particulier entre 150 et 1 000 kW.

6. EZE (1, 36) selon l'une quelconque des revendications précédentes, dans laquelle les condensateurs (13) sont connectés en étoile ou en triangle.

7. EZE (1, 36) selon l'une quelconque des revendications précédentes, dans laquelle l'EZE (1, 36) présente des résistances de freinage (14) qui sont connectées à la machine asynchrone (5) par l'intermédiaire d'un appareil de commutation de résistance de freinage (15), de manière préférée selon un montage en étoile ou en triangle.

8. EZE (1, 36) selon la revendication 7, dans laquelle l'appareil de commutation de résistance de freinage (15) présente des contacts de travail (16) afin de connecter les résistances de freinage (14) à la machine asynchrone (5) ou afin de déconnecter les résistances de freinage (14) de la machine asynchrone (5), dans laquelle les contacts de travail (16) sont de manière préférée des contacts de travail de fermeture permettant de mettre en marche de manière active les résistances de freinage (14) ou des contacts de travail d'ouverture permettant de mettre hors tension de manière active les résistances de freinage (14), afin de freiner en toute sécurité le rotor de la machine asynchrone (5) en cas de défaillance de la commande, telle qu'une défaillance de l'alimentation en tension de commande.

9. EZE (1, 36) selon l'une quelconque des revendications 7 ou 8, dans laquelle l'EZE (1, 36) présente une unité de commande (20) permettant de commander l'appareil de commutation de résistance de freinage (15), laquelle unité de commande est conçue pour connecter les résistances de freinage (14) à la machine asynchrone (5) une ou plusieurs fois en cas de découplage de l'EZE (1, 36) du réseau électrique (11), en particulier en cas d'arrêt d'urgence de l'EZE (1, 36), en se basant sur une tension d'EZE mesurée, de manière préférée à un moment où la tension d'EZE mesurée dépasse une valeur limite.

10. EZE (1, 36) selon l'une quelconque des revendications précédentes, dans laquelle l'EZE (1, 36) présente un appareil de commutation de réseau (17), de manière préférée un contacteur, un interrupteur de puissance ou un interrupteur de coupure de charge, permettant un raccordement ou un découplage de l'EZE (1, 36) au réseau électrique (11), et une unité de commande (20) permettant une commande de l'appareil de commutation de réseau (17), dans laquelle l'unité de commande (20) est conçue pour commuter la machine asynchrone (5) de manière synchrone au réseau électrique (11), l'unité de commande (20) créant de manière préférée une tension différentielle (21) en se basant sur une tension de réseau mesurée et sur une tension d'EZE mesurée, et, sur ce fondement, commutant l'appareil de commutation de réseau (17) en dessous d'une valeur limite (35) de la tension différentielle (21), de manière préférée pour une valeur de tension comprise entre 0 V et 150 V, en particulier inférieure à 100 V.

11. EZE (1, 36) selon la revendication 10, dans laquelle l'unité de commande (20) est conçue pour enregistrer la tension différentielle (21) sur un intervalle de temps (31) en vue d'une synchronisation de la commutation, afin de former une courbe de tension différentielle, en particulier une courbe de tension différentielle sinusoïdale, et afin de convertir la courbe de tension différentielle en une enveloppe (33), de manière préférée grâce à un modèle de régression sur les maxima de tension (32), en particulier grâce à un démodulateur d'enveloppe, détermine une ou plusieurs propriété(s) de l'enveloppe (33), telles qu'un gradient actuel de l'enveloppe (33), et détermine, en se basant sur la ou les plusieurs propriété(s) et information(s) concernant le dispositif de commutation de réseau (17), en particulier son temps de réponse (30) pour la fermeture des contacts de travail, un moment de commande (34) permettant de transmettre une commande de commutation au dispositif de commutation de réseau (17) et auquel la tension différentielle (21) est inférieure à la valeur limite (35) au terme du temps de réponse (30), et envoie la commande de commutation à l'appareil de commutation de réseau (17) au moment de commande (34) déterminé.

12. EZE (1, 36) selon la revendication 10 ou 11, dans laquelle le convertisseur d'énergie (2) comprend une machine d'expansion (7) et un évaporateur (6) qui évapore un fluide de travail grâce à la puissance thermique (3) fournie et le dirige vers la machine d'expansion (7) en vue d'une conversion en puissance mécanique, et une pompe d'alimentation (9) dont la vitesse de rotation peut être commandée et qui est conçue pour recevoir le fluide de travail en provenance de la machine d'expansion (7), de manière préférée en provenance d'un condenseur intercalé (8), en vue de sa fluidification, et pour le renvoyer dans l'évaporateur (6), dans laquelle l'unité de commande (20) est conçue pour réguler ou commander la vitesse de rotation de la pompe d'alimentation (9), ce qui permet d'ajuster le rapport de pression de la vapeur fraîche par rapport à la pression dans le condenseur (8), de sorte que la vitesse de rotation de la machine d'expansion (7) est mise en correspondance avec la fréquence de réseau ou la vitesse de réseau du réseau électrique (11).

13. EZE (1, 36) selon l'une des revendications précédentes, dans laquelle l'EZE (1, 36) comprend un second convertisseur d'énergie, de manière préférée un moteur à combustion interne (37), dans laquelle le second convertisseur d'énergie produit de la chaleur résiduelle qui est fournie au premier convertisseur d'énergie (2) en vue d'une production d'électricité.

14. EZE (1, 36) selon la revendication 13, dans laquelle l'EZE (1, 36) comprend un générateur électrique (50), dans laquelle le second convertisseur d'énergie est conçu pour entrainer le générateur électrique (50).

15. Installation de production, EZA, (51), avec au moins une EZE (1, 36) selon les revendications précédentes, dans laquelle l'EZA (51) est raccordée à un réseau électrique (58), en particulier à un réseau électrique public à terre ou à un réseau électrique de bateau, en vue d'une production d'électricité.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3940913 A1
- DE 102018209054 A1
- DE 3705310 A1

**In der Beschreibung aufgeführte Nicht-Patentliteratur**

- **ROLF FISCHER**. Elektrische Maschinen. 2017